# EUROPEAN PATENT SPECIFICATION

(11) **EP 1 398 255 B1**
(45) Date of publication and mention of the grant of the patent: **28.04.2010**
(21) Application number: 03251115.6
(22) Date of filing: 25.02.2003
(51) Int. Cl.: B62J 7/04, B62J 1/28

(54) **Rear luggage-carrier device for motorcycle**
Heckgepäckträgervorrichtung für Motorrad
Dispositif de porte-bagages pour motocyclette

(30) Priority: 05.09.2002 JP 2002260055
(43) Date of publication of application: 17.03.2004
(73) Proprietor: Honda Access Corporation, Niiza-shi, Saitama (JP)
(72) Inventor: Kan, Makoto, c/o Honda Access Corporation, Niiza-shi, Saitama (JP); Mifune, Yoshinori, c/o Honda Access Corporation, Niiza-shi, Saitama (JP)
(74) Representative: Cheyne, John Robert Alexander M.

(56) References cited:
- JP-A- 11 139 369
- US-A- 3 822 917
- US-A- 3 873 127
- US-A- 3 901 534
- US-A- 5 997 088
- US-A1- 2002 011 745

## Description

### BACKGROUND OF THE INVENTION

### FIELD OF THE INVENTION

The present invention relates to a rear luggage-carrier device for a motorcycle, in which a rear carrier disposed in the rear of a pillion portion for a tandem rider is supported by a pair of stays secured to left and right rear portions of a vehicle body.

### DESCRIPTION OF THE RELATED ART

A conventional rear luggage-carrier device for a motorcycle is already well-known from, for example, Japanese Patent Application Laid-open No. 2002-127,968.

A backrest is disposed in the rear of a pillion portion in some cases in order to improve the riding comfort of a tandem rider on the pillion portion, and such a backrest is usually fixed to a vehicle body. However, if the backrest is fixedly disposed between a rear carrier and the pillion portion, relatively large luggage cannot be mounted on the rear carrier with its portion protruding toward the pillion portion when there is no tandem rider. In addition, when operation of detaching the pillion portion from the vehicle body is carried out, the backrest obstructs this operation, so that it is difficult to smoothly carry out the detaching operation.

Document US 2002/011745 shows a rear luggage-carrier device for a motorcycle according to the preamble of claim 1.

### SUMMARY OF THE INVENTION

The present invention has been accomplished with such circumstances in view, and it is an object of the present invention to provide a rear luggage-carrier device for a motorcycle, wherein relatively large luggage can be mounted on a rear carrier, the operation of detaching the pillion portion from the vehicle body cannot be hindered, and moreover a backrest can be disposed in the rear of the pillion portion in order to improve the riding comfort of a tandem rider.

According to the present invention, there is provides a rear luggage carrier device for a motorcycle comprising a pair of stays for disposition at left and right rear portions of a body of the motorcycle; a rear carrier supported by the stays for disposition to the rear of a pillion portion of the motorcycle; and a backrest supported on the pair of stays, the backrest being turnable relative to the stays between an upright position in which it is located above a rear end of the pillion portion to contact from behind the waist of a tandem rider seated on the pillion portion and a housed position in which it has been turned rearward from above the rear end of the pillion portion, characterised in that the backrest comprises supported members disposed adjacent inner surfaces of the stays, the supported members being turnably supported on the stays to enable turning of the backrest between the upright and housed positions, the backrest in the housed position being housed in a front portion of the rear carrier so that luggage can be mounted on the backrest.

With this arrangement of the first feature, the backrest is turnable between the upright position and the housed position. In the upright position, the backrest can contact from behind the waist of a tandem rider on the pillion portion, and hence the riding comfort of the tandem rider can be improved. In the housed position, the backrest is housed in the front portion of the rear carrier, and hence the backrest does not exist between the rear carrier and the pillion portion, so that relatively large luggage can be mounted on the rear carrier in such a manner that a portion of the luggage protrudes toward the pillion portion when no tandem rider sits on the pillion portion. In addition, when the operation of detaching the pillion portion from the vehicle body B is carried out, the backrest does not obstruct this operation, and hence the detaching operation for the pillion portion can be smoothly achieved.

According to a second embodiment of the present invention, in addition to the arrangement of the first feature, a grip capable of being grasped by the tandem rider on the pillion portion is mounted between the stay and the rear carrier. With this arrangement, the feeling of security of the tandem rider can be improved, and the supporting rigidity of the rear carrier can be enhanced.

According to a third embodiment of the present invention, in addition to the arrangement of the first or second,
a locking pin is mounted in each of the supported members and biased by a spring in a direction to protrude at one end thereof from the supported member toward each of the stays; a pair of locking bores are provided in each of the stays so that one end of the locking pin is inserted through and engaged in any of the locking bores in the upright position and the housed position of the backrest; and an operating portion is provided at the other end of the locking pin protruding from the supported member on a side opposite from the stay. With this arrangement, it is possible to easily switch over, from one to another, a state in which the backrest is locked in its upright position and its housed position, and a state in which the locked state is released to permit the turning of the backrest between the upright position and the housed position.

### BRIEF DESCRIPTION OF THE DRAWINGS

Fig.1 is a side view of a motorcycle.
Fig.2 is an enlarged side view of a rear portion of the motorcycle.
Fig.3 is a sectional view taken along a line 3-3 in Fig.2.
Fig.4 is a view taken in a direction of an arrow 4 in Fig.2.
Fig.5 is a perspective view of a rear luggage-carrier device.
Fig.6 is an enlarged sectional view showing a supported member in a locked state along a line 6-6 in Fig.2.
Fig.7 is a view taken in a direction of an arrow 7 in Fig.4.
Fig. 8 is a sectional view similar to Fig. 6, but in an unlocked state.

### DETAILED DESCRIPTION OF THE PREFERRED EMBODIMENT

The present invention will be described with reference to a preferred embodiment shown in the attached drawings.

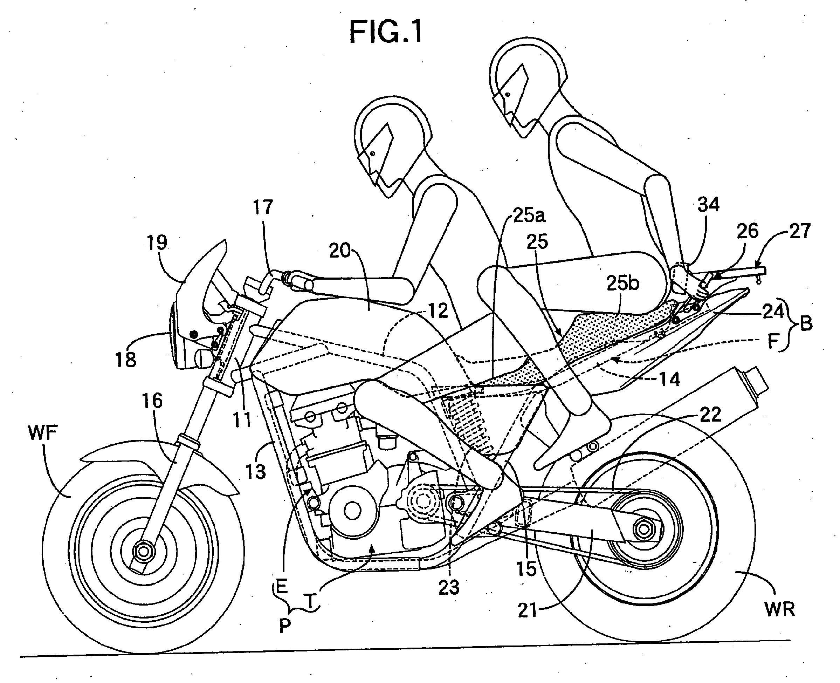

Referring first to Fig.1, a vehicle body framework F of a motorcycle includes a head pipe 11, a main frame 12 extending rearward downward from the head pipe 11 and bent further downward at an intermediate portion, a pair of left and right down-tubes 13 extending rearward downward from the head pipe 11 below the main frame 12 and bent rearward at intermediate portions, a pair of left and right seat rails 14 extending rearward from the intermediate portion of the main frame 12, and a pair of lower pipes 15 extending rearward upward from rear ends of the down-tubes 13 and connected to the intermediate portions of the seat rails 14. The main frame 12 is connected at its rear end to intermediate portions of the lower pipes 15.

A front fork 16 for supporting a front wheel WF is steerably supported on the head pipe 11. A steering handlebar 17 is connected to an upper portion of the front fork 16. A head lamp 18 and a meter visor 19 are mounted to the upper portion of the front fork 16 in front of the head pipe 11.

A power unit P comprising an engine E and a transmission T is mounted on the vehicle body framework F such that it is disposed in a space surrounded by the main frame 12, the down-tubes 13 and the lower pipes 15. A fuel tank 20 is mounted on the main frame 12 astride the main frame 12 above the power unit P.

A rear fork 21 is pivotally supported at its front end on a rear portion of the main frame 12. An output from the power unit P is transmitted through a chain 22 to a rear wheel WR supported at a rear end of the rear fork 21. Further, a rear cushion 23 is mounted between the vehicle body framework F and the rear fork 21.

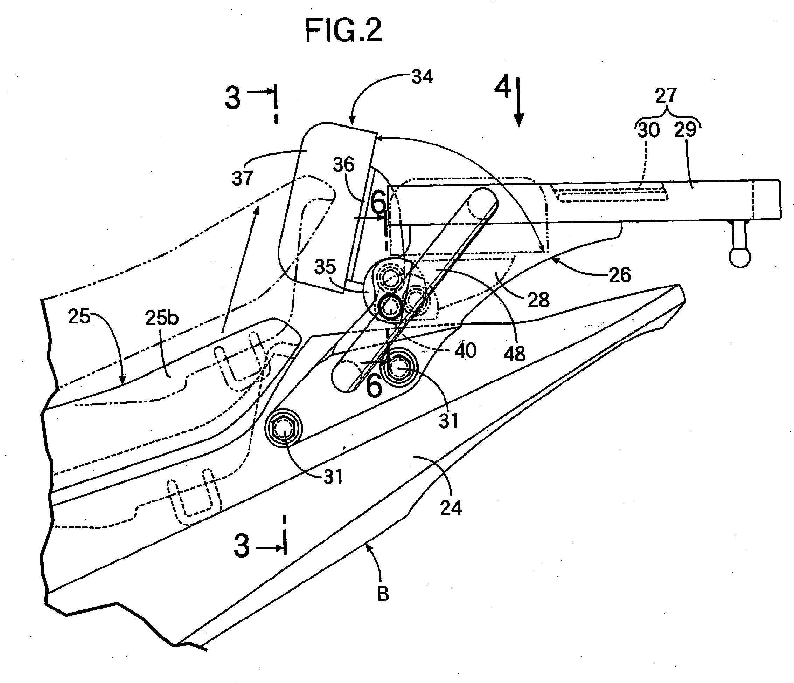

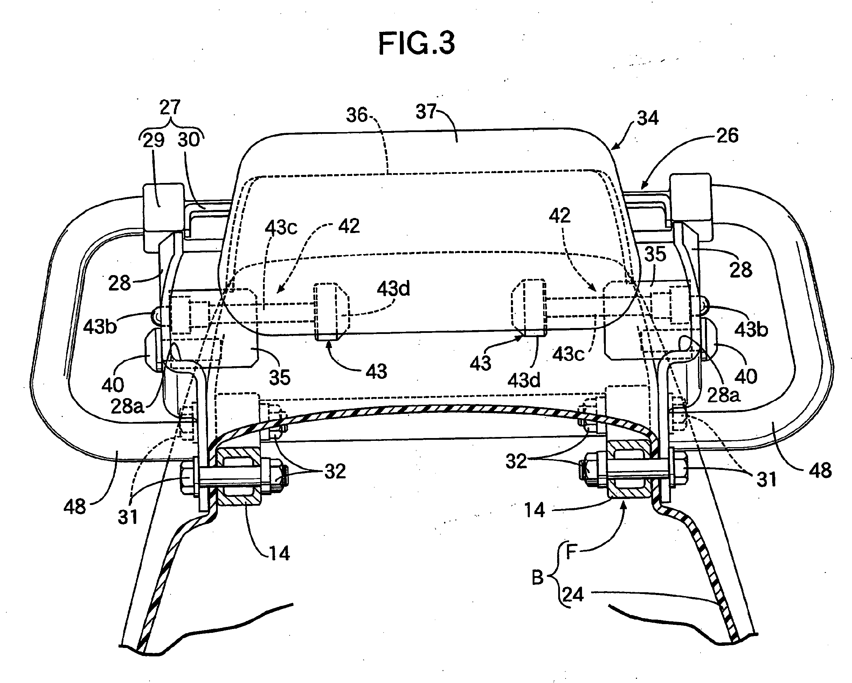

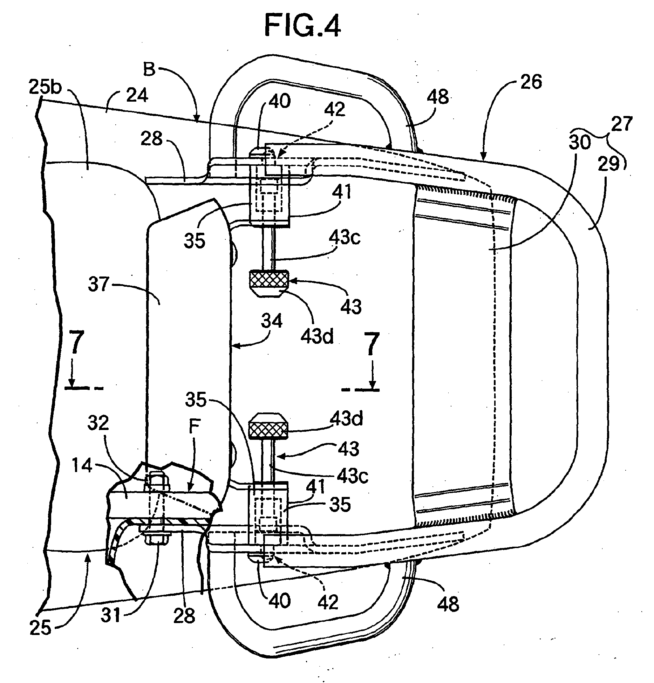

Referring also to Figs. 2 to 4, a rear portion of the vehicle body framework For, that is, the seat rails 14 are covered with a synthetic resin rear cover 24 which constitutes a vehicle body B by cooperation with the vehicle body framework F. A tandem-type seat 25 is detachably mounted on the vehicle body B in the rear of the fuel tank 10, and includes a main seat portion 25a on which a rider sits, and a pillion portion 25b which is disposed in the rear of the main seat portion 25a and on which a tandem rider sits.

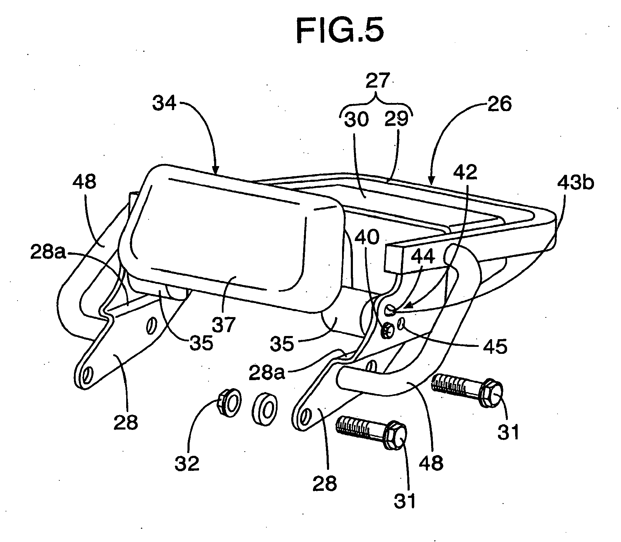

Referring also to Fig.5, a rear luggage-carrier device 26 is mounted to the vehicle body B in the rear of the pillion portion 25b, and includes a rear carrier 27 disposed in the rear of the pillion portion 25b, and a pair of stays 28, 28 secured to left and right rear portions of the vehicle body B to support the rear carrier 27.

The rear carrier 27 comprises a frame member 29 formed into a substantially U-shape with its front portion opened in a substantially horizontal plane, and a connecting plate 30 which connects opposite intermediate portions of the frame member 29 to each other. The pair of left and right stays 28, 28 are welded at their upper ends to lower surfaces of opposite sides of the frame member 29.

The pair of left and right stays 28, 28 are disposed on opposite sides of the rear cover 24, and extend rearward upward. The stays 28, 28 are fastened to the seat rails 14, 14, respectively, by a pair of bolts 31 and a pair of nuts 32 so that the rear cover 24 is sandwiched between the stays 28, 28 and the seat rails 14, 14.

A backrest 34 is turnably supported on the stays 28, 28 of the rear luggage-carrier device 26 for turning movement between an upright position in which it is located above a rear end of the pillion portion 25b such that it can contact from behind the waist of the tandem rider on the pillion portion 25b, and a housed position in which it has been turned rearward from above the rear end of the pillion portion 25b and housed in a front portion of the rear carrier 27, so that luggage can be mounted on the backrest 34.

The backrest 34 comprises a pair of supported members 35, 35 opposed to the stays 28, 28 from the sides of inner surfaces, a support plate 36 which connects the supported members 35, 35 to each other, and a seat cushion 37 mounted to the support plate 36.

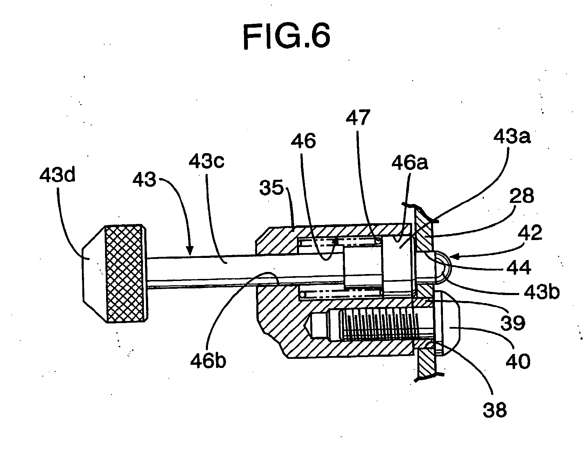

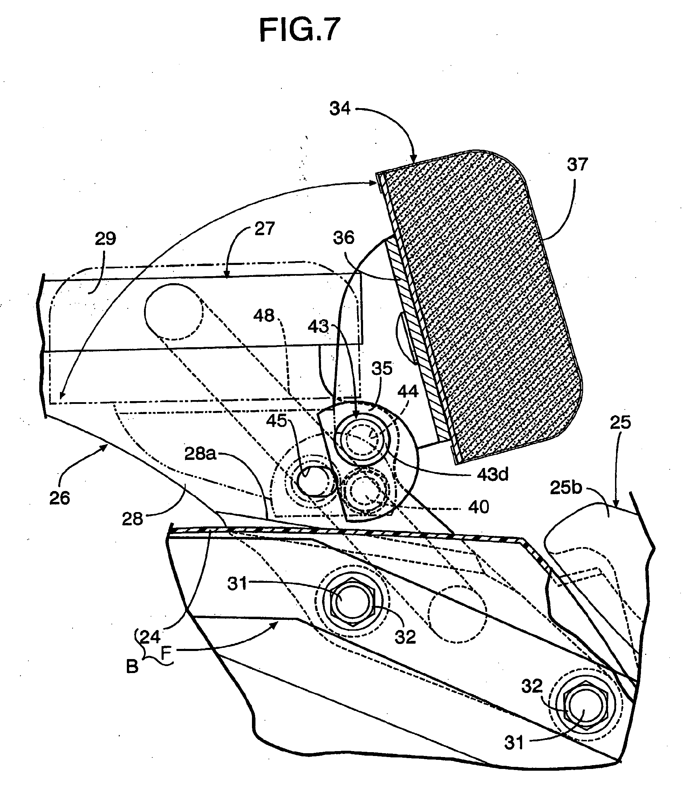

Referring to Figs.6 and 7, support bores 38 are coaxially provided in the stays 28, 28, and cylindrical collars 39 are turnably inserted into the support bores 38. Moreover, bolts 40 engaged on outer surfaces of the stays 28 are threadedly fitted into the supported members 35, 35 through the collars 39, and the supported members 35, 35, and thus the backrest 34 are turnably supported on the stays 28, 28 so that they can be turned about axes of the bolts 40.

Each of the stays 28, 28 is bent and formed into a shape with its upper portion bulged outward so that a step 28a facing upward is formed on an inner surface of an intermediate portion of each stay 28 in order to dispose the supported member 35 inside an upper portion of the stay 28. On the other hand, each of the supported members 35 is basically of a short columnar shape, but a portion of the supported member 35 is cut off to form a flat surface 41 in order to avoid the interference with the step 28a when the backrest 34 is turned from the upright position to the housed position.

Locking mechanisms 42 are provided between the supported members 35, 35 and the stays 28, 28, and each adapted to switch over, from one to another, a state in which the backrest 34 is locked in the upright position and the housed position, and a state in which the locked state is released to permit the turning movement of the backrest 34 between upright position and the housed position.

Each of the locking mechanisms 42 is comprised of a locking pin 43 mounted on the supported member 35, and biased by a spring in a direction to protrude at one end thereof from the supported member 35 toward the stay 28, and a pair of locking bores 44 and 45 provided in the stay 28 such that one end of the locking pin 43 is inserted through and engaged alternatively in any of the locking bores 44 and 45.

A slide bore 46 is provided in each of the supported member 35 in parallel to the bolt 40 at a location displaced from a turning center of the supported member 35, i.e., the axis of the bolt 40. The slide bore 46 comprises a larger-diameter bore portion 46a which opens at one end toward the stay 28, and a smaller-diameter bore portion 46b having a diameter smaller than that of the larger-diameter bore portion 46a and connected coaxially to the other end of the larger-diameter bore portion 46a.

The locking pin 43 includes a larger-diameter slide portion 43a slidably received in the larger-diameter bore portion 46a of the slide bore 46, an engage pin portion 43b coaxially connected to the larger-diameter slide portion 43a, a slide shaft portion 43c which is coaxially connected at one end to the larger-diameter slide portion 43a on a side opposite from the engage pin portion 43b and which is passed slidably through the smaller-diameter bore portion 46b, and an operating portion 43d provided at the other end of the slide shaft portion 43c. The operating portion 43d is formed into a disk-shape with a diameter larger than that of the slide shaft portion 43c, and has an outer peripheral surface knurled.

A coil spring 47 is accommodated under compression in the larger-diameter bore portion 46a of the slide bore 46 between the larger-diameter slide portion43a and a step between the larger-diameter bore portion 46a and the smaller-diameter bore portion 46b, so that the locking pin 43 is biased by a spring force exhibited by the coil spring 47 in a direction such that the engage pin portion 43b at one end thereof is inserted through and engaged alternatively in any of the locking bores 44 and 45.

On the other hand, one 44 of the pair of locking bores 44 and 45 is provided in the stay 28 such that the engage pin portion 43b at one end of the locking pin 43is inserted through and engaged in the one locking bore 44 when the backrest 34 is in the upright position, and the other locking bore 45 is provided in the stay 28 such that the engage pin portion 43b at one end of the locking pin 43 is inserted through and engaged in the other locking bore 45, when the backrest 34 is in the housed position.

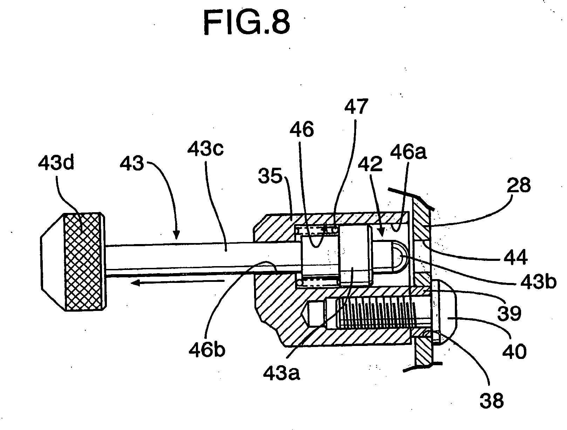

The state in which the locking pin 43 has been inserted through and engaged in any of the locking bores 44 and 45 is maintained by the spring force of the coil spring 47, but when a user grasps the operating portion 43d to pull the locking pin 43 inwards, as shown in Fig.8, the locking pin 43 is slid inwards against the spring force of the coil spring 47, to thereby easily release the state in which the engage pin portion 43b has been inserted through and engaged in any of the locking bores 44 and 45.

Grips 48, 48 capable of being grasped by the tandem rider on the pillion portion 25b are mounted between opposite sides of the frame member 29 of the rear carrier 27 and both the stays 28, 28. Each of the grips 48, 48 is welded at its opposite ends to the frame member 29 and each of the stays 28, 28.

The operation of this embodiment will be described below. The backrest 34 is supported on the pair of left and right stays 28, 28, so that it can be turned between the upright position in which it is located above the rear portion of the pillion portion 25b such that it can contact from behind the waist of the tandem rider on the pillion portion 25b, and the housed position in which it has been turned rearward from above the rear end of the pillion portion 25b and housed in the front portion of the rear carrier 27, so that luggage can be mounted on the backrest 34. Therefore, in the upright position, a riding comfort of the tandem rider on the pillion portion 25b can be improved by bringing the backrest 34 into contact from behind with the waist of the tandem rider on the pillion portion 25b. In the housed position, the backrest 34 is housed in the front portion of the rear carrier 27, and hence the backrest 34 does not exist between the rear carrier 27 and the pillion portion 25b, so that relatively large luggage can be mounted on the rear carrier 27 such that a portion of the luggage protrudes toward the pillion portion 25b when no tandem rider sits on the pillion portion 25b. In addition, when the operation of detaching the pillion portion 25b from the vehicle body B is carried out, the backrest 34 cannot obstruct this operation, and hence the smooth detaching operation for the pillion portion 25b can smoothly be achieved.

In addition, the supported members 35, 35 are mounted on the opposite sides of the backrest 34 and turnably supported on the stays 28, 28. The locking pin 43 is mounted in each of the supported members 35, and biased in the direction to protrude at one end thereof from the supported member 35 toward the stay 28. Each of the stays 28 is provided with the pair of locking bores 44 and 45. The engage pin portion 43b at one end of the locking pin 43 is inserted and engaged through the locking bores 44 and 45 in the upright position and the housed position of the backrest 34. The operating portion 43d is provided at the other end of the locking pin 45 protruding from the supported member 35 on the side opposite from the stay 28. Therefore, it is possible to easily switch over, from one to another, the state in which it can be locked in the upright position and the housed position, and the state in which the locked state is released to permit the turning movement of the backrest 34 between upright position and the housed position.

Further, the grips 48, 48 capable of being grasped by the tandem rider on the pillion portion 25b are mounted between the stays 28, 28 and the rear carrier, and hence the feeling of security of the tandem rider can be enhanced, and the supporting rigidity of the rear carrier 27 can be enhanced.

## Claims

1. A rear luggage carrier device (26) for a motorcycle comprising a pair of stays (28, 28) for disposition at left and right rear portions of a body (24) of the motorcycle; a rear carrier (27) supported by the stays (28, 28) for disposition to the rear of a pillion portion (25b) of the motorcycle; and a backrest (34) supported on the pair of stays (28, 28), the backrest (34) being turnable relative to the stays (28, 28) between an upright position in which it is located above a rear end of the pillion portion (25b) to contact from behind the waist of a tandem rider seated on the pillion portion (25b) and a housed position in which it has been turned rearward from above the rear end of the pillion portion (25b), **characterised in that** the backrest (34) comprises supported members (35, 35) disposed adjacent inner surfaces of the stays (28, 28), the supported members (35, 35) being turnably supported on the stays (28, 28) to enable turning of the backrest (34) between the upright and housed positions, the backrest (34) in the housed position being housed in a front portion of the rear carrier (27) so that luggage can be mounted on the backrest (34).

2. A rear luggage-carrier device (26) for a motorcycle as claimed in claim 1, **characterised in that** a grip (48) capable of being grasped by the tandem rider on the pillion portion (25b) is mounted between the stay (28) and the rear carrier (27).

3. A rear luggage-carrier device (26) for a motorcycle as claimed in claim 1 or 2, **characterised in that** a locking pin (43) is mounted in each of the supported members (35, 35) and biased by a spring in a direction to protrude at one end thereof from the supported member (35) toward the respective stay (28, 28), a pair of locking bores (44, 45) being provided in each of the stays (28, 28) for engagement by the said one end of the locking pin (43) respectively in the upright position and the housed position of the backrest (34),an operating portion (43d) being provided at the other end of the locking pin (43) protruding from the supported member (35) on a side opposite from the stay (28).

4. A rear luggage-carrier device (26) for a motorcycle as claimed in any preceding claim, **characterised in that** the rear carrier (27) comprises a frame member (29) which is substantially U-shaped and opens toward a front side of the motorcycle, the backrest (34) being housed within a space defined by the frame member (29) when in the housed position.

5. A rear luggage-carrier device (26) for a motorcycle as claimed in claim 4, **characterised in that** the rear carrier (27) further comprises a connecting member (30) which connects opposite portions of the frame member (29) to each other, the backrest (34) being housed in a space defined by the frame member (29) and the connecting member (30) when in the housed position.

6. A rear luggage-carrier device (26) for a motorcycle as claimed in any preceding claim, **characterised in that** the backrest (34) provides a luggage support surface substantially aligned with the connecting member (30) of the rear carrier (27) when in the housed position.

7. A motorcycle with a rear luggage-carrier device according to any one of claims 1 to 6.

## Patentansprüche

1. Hintere Gepäckträgervorrichtung (26) für ein Motorrad, umfassend ein Paar von Verankerungen (28, 28) zur Anordnung an einem linken und einem rechten Abschnitt einer Karosserie (24) des Motorrads; einen hinteren Träger (27), der von den Verankerungen (28, 28) für eine Anordnung an dem Hinteren eines Beifahrerabschnitts (25b) des Motorrads gehalten wird; und eine Rücklehne (34), die an dem Paar von Verankerungen (28, 28) gehalten ist, wobei die Rücklehne (34) relativ zu den Verankerungen (28, 28) zwischen einer aufrechten Position, in der sie über einem Hinterende des Beifahrerabschnitts (25b) angeordnet ist, um von hinten die Taille eines auf dem Beifahrerabschnitt (25b) sitzenden Beifahrers zu kontaktieren, und einer aufgenommenen Position, in der sie von oberhalb des Hinterendes des Beifahrerabschnitts (25b) nach hinten gedreht ist, drehbar ist, **dadurch gekennzeichnet, dass** die Rücklehne (34) gehaltene Elemente (35, 35) umfasst, die an benachbarten Innenflächen der Verankerungen (28, 28) angeordnet sind, wobei die gehaltenen Elemente (35, 35) drehbar an den Verankerungen (28, 28) gehalten sind, um ein Drehen der Rücklehne (34) zwischen der aufrechten Position und der aufgenommenen Position zu ermöglichen, wobei die Rücklehne (34) in der aufgenommenen Position in einem Vorderabschnitt des hinteren Trägers (27) aufgenommen ist, so dass Gepäck auf der Rücklehne (34) befestigt werden kann.

2. Hintere Gepäckträgervorrichtung (26) für ein Motorrad nach Anspruch 1, **dadurch gekennzeichnet, dass** ein Griff (48), der dazu geeignet ist, von einem Beifahrer auf dem Beifahrerabschnitt (25b) gegriffen zu werden, zwischen der Verankerung (28) und dem hinteren Träger (27) angebracht ist.

3. Hintere Gepäckträgervorrichtung (26) für ein Motorrad nach Anspruch 1 oder 2, **dadurch gekennzeichnet, dass** ein Verschlussstift (43) in jedem der gehaltenen Elemente (35, 35) befestigt ist und von einer Feder in eine Richtung vorgespannt ist, um an einem Ende davon von dem gehaltenen Element (35) in Richtung der jeweiligen Verankerung (28, 28) hervorzustehen, wobei ein Paar von Verschlussbohrungen (44, 45) in jeder der Verankerungen (28, 28) für einen Eingriff durch das eine Ende des Verschlussstiftes (43) in der aufrechten Position beziehungsweise in der aufgenommenen Position der Rücklehne (34) vorgesehen ist, wobei ein Betätigungsbereich (43d) an dem anderen Ende des Verschlussstiftes (43) vorgesehen ist, oder von dem gehaltenen Element (35) an einer Seite gegenüber von der Verankerung (28) hervorsteht.

4. Hintere Gepäckträgervorrichtung (26) für ein Motorrad nach einem der vorhergehenden Ansprüche, **dadurch gekennzeichnet, dass** der hintere Träger (27) ein Rahmenelement (29) umfasst, das im Wesentlichen U-förmig ist und sich zu einer Vorderseite des Motorrads öffnet, wobei die Rücklehne (34) innerhalb eines Raumes aufgenommen ist, der in der aufgenommenen Position durch das Rahmenelement (29) definiert ist.

5. Hintere Gepäckträgervorrichtung (26) für ein Motorrad nach Anspruch 4, **dadurch gekennzeichnet, dass** der hintere Träger (27) ferner ein verbindendes Element (30) umfasst, das gegenüberliegende Abschnitte des Rahmenelements (29) miteinander verbindet, wobei die Rücklehne (34) in einem Raum aufgenommen ist, der in der aufgenommenen Position durch das Rahmenelement (29) und das verbindende Element (30) definiert ist.

6. Hintere Gepäckträgervorrichtung (26) für ein Motorrad nach einem der vorhergehenden Ansprüche, **dadurch gekennzeichnet, dass** die Rücklehne (34) eine Gepäckhaltefläche bereitstellt, die in der aufgenommenen Position im Wesentlichen mit dem verbindenden Element (30) des hinteren Trägers (27) ausgerichtet ist.

7. Motorrad mit einer hinteren Gepäckträgervorrichtung nach einem der Ansprüchen bis 6.

## Revendications

1. Dispositif de porte-bagages arrière (26) pour un motocycle comprenant deux montants (28, 28) destinés à être disposés sur des portions arrière gauche et droite d'un corps (24) du motocycle ; un support arrière (27) soutenu par les montants (28, 28) destiné à être disposé à l'arrière d'une portion formant siège arrière (25b) du motocycle ; et un dossier (34) soutenu sur les deux montants (28, 28), le dossier (34) pouvant pivoter par rapport aux montants (28, 28) entre une position verticale dans laquelle il est situé au-dessus d'une extrémité arrière de la portion formant siège arrière (25b) pour toucher par l'arrière la taille d'un passager en tandem assis sur la portion formant siège arrière (25b) et une position encastrée dans laquelle il a été pivoté vers l'arrière depuis au-dessus de l'extrémité arrière de la portion formant siège arrière (25b), **caractérisé en ce que** le dossier (34) comprend des éléments soutenus (35, 35) disposés de façon adjacente aux surfaces internes des montants (28, 28), les éléments soutenus (35, 35) étant soutenus de manière à pouvoir pivoter sur les montants (28, 28) pour permettre de pivoter le dossier (34) entre les positions verticale et encastrée, le dossier (34) dans la position encastrée étant encastré dans une portion avant du support arrière (27) de sorte que le bagage peut être monté sur le dossier (34).

2. Dispositif de porte-bagages arrière (26) pour un motocycle selon la revendication 1, **caractérisé en ce qu'**une poignée (48) pouvant être saisie par le passager en tandem sur la portion formant siège arrière (25b) est montée entre le montant (28) et le support arrière (27).

3. Dispositif de porte-bagages arrière (26) pour un motocycle selon les revendications 1 ou 2, **caractérisé en ce qu'**une tige de blocage (43) est montée dans chacun des éléments soutenus (35, 35) et sollicitée par un ressort dans un sens pour faire saillie à une extrémité de celui-ci depuis l'élément soutenu (35) vers le montant respectif (28, 28), deux alésages de blocage (44, 45) étant prévus dans chacun des montants (28, 28) pour engagement par ladite une extrémité de la tige de blocage (43) respectivement dans la position verticale et la position encastrée du dossier (34), une portion de commande (43d) étant prévue à l'autre extrémité de la tige de blocage (43) faisant saillie depuis l'élément soutenu (35) sur un côté opposé à partir du montant (28).

4. Dispositif de porte-bagages arrière (26) pour un motocycle selon l'une quelconque des revendications précédentes, **caractérisé en ce que** le support arrière (27) comprend un élément formant cadre (29) qui est essentiellement en forme de U et s'ouvre vers un côté avant du motocycle, le dossier (34) étant encastré à l'intérieur d'un espace défini par l'élément formant cadre (29) lorsqu'il est dans la position encastrée.

5. Dispositif de porte-bagages arrière (26) pour un motocycle selon la revendication 4, **caractérisé en ce que** le support arrière (27) comprend en outre un élément de raccordement (30) qui raccorde de portions opposées l'une à l'autre de l'élément formant cadre (29), le dossier (34) étant encastré dans un espace défini par l'élément formant cadre (29) et l'élément de raccordement (30) lorsqu'il est dans la position encastrée.

6. Dispositif de porte-bagages arrière (26) pour un motocycle selon l'une quelconque des revendications précédentes, **caractérisé en ce que** le dossier (34) fournit une surface de support de bagages essentiellement alignée avec l'élément de raccordement (30) du support arrière (27) lorsqu'il est dans la position encastrée.

7. Motocycle avec un dispositif de porte-bagages arrière selon l'une quelconque des revendications 1 à 6.
